# EUROPEAN PATENT SPECIFICATION

(11) **EP 1 470 461 B1**
(45) Date of publication and mention of the grant of the patent: **24.05.2006**
(21) Application number: 03700634.3
(22) Date of filing: 07.01.2003
(51) Int. Cl.: G05D 7/01, F16K 1/52, F16K 15/18

(54) **APPARATUS FOR CONTROL OF DIFFERENTIAL PRESSURE IN A HEATING AND COOLING SYSTEM**
VORRICHTUNG ZUR STEUERUNG DES DIFFERENZDRUCKS IN EINEM HEIZ- UND KÜHLSYSTEM
APPAREIL DE COMMANDE DE LA PRESSION DIFFERENTIELLE DANS UN SYSTEME DE CHAUFFAGE ET DE REFROIDISSEMENT

(30) Priority: 28.01.2002 SE 0200239
(43) Date of publication of application: 27.10.2004
(73) Proprietor: Tour & Andersson AB, 524 80 Ljung (SE)
(72) Inventor: ENGELBREKTSSON, Anders, S-524 32 Herrljunga (SE)
(74) Representative: Pitkänen, Hannu Alpo Antero
(86) International application number: PCT/SE2003/000005
(87) International publication number: WO 2003/065141

(56) References cited:
- EP-A1- 0 615 099
- FR-A1- 2 675 598
- FR-A1- 2 724 160
- GB-A- 1 228 079

## Description

The present invention relates to an apparatus for control of differential pressure in a heating and cooling system according to the preamble of claim 1.

Such an apparatus is designed to keep a pressure difference between a feed pipe and a return pipe at a constant level.

The known apparatuses, used for this purpose, and chiefly pressure difference regulators used in them have various drawbacks. Thus, the possibilities of mounting the regulators are often limited. Thus, a regulator, which is designed to be mounted in a feed duct, is not suitable in a typical case to be mounted in a return duct and vice versa. Also, exchanges and repairs of details often cannot be done during operation. Various regulating elements, which belong to said regulators, e.g. a rubber membrane and a metal piston, are not mutually interchangeable in the same construction. A reconstruction and an adjustment of the regulators to other systems may be difficult or impossible to carry out. Centering problems may arise for important moveable parts, increased friction and other problems possibly resulting therefrom and the desired function becoming impaired or jeopardized. In this connection, seats connected to the housing may be problematic. Principally, required seat variations may be difficult to provide for. The guiding means are often limited and deaeration problems may occur. A precise control and/or the function during varying liquid quantities may result in problems. Finally, the life and the resistance to extreme medium temperatures , such as - 40°C and +180°C , may be extremely limited.

In documents FR-A1-2675598 and EP-A1-0615099 has been presented apparatuses for control of differential pressure in a heating or cooling system. However the constructions of the apparatuses described in these documents are complicated and possibilities of mounting the regulators are limited.

The object of the present invention is to counteract and to eliminate the above-mentioned problems as much as possible. Also, the object of the invention is to further the development of the state of the art in this field in various respects. Particularly, the object of the invention is to provide a pressure difference regulator, which principally is suitable to be mounted in feed as well as return ducts and which is designed to function at or in a simple way also be adjusted to extreme temperatures or principally varying operating conditions.

These objects are attained according to the present invention by means of an apparatus of the type described in the introduction, principally designed in the way set forth in the characterizing clause of claim 1.

Additional characterizing features of the invention are set forth in the following description, reference being made to the accompanying drawings, which depict a few preferred but not limiting combinations. The drawings show in detail in:
Fig. 1 schematically an apparatus according to the invention, which is a part of a cooling system with one regulating and one measuring valve, mounted in a feed duct and an adjustment valve as well as a pressure difference regulator according to the invention, mounted in a return duct;
Fig. 2 an apparatus and a system, respectively, according to Fig. 1, but with the regulating valve on the inlet and the outlet sides connected to a pressure difference regulator according to the invention and without a measuring valve;
Figs. 3 and 4 schematically reversed mounting suggestions for a pressure difference regulator according to the invention in a return and a feed duct, respectively ;
Fig. 5 an axial diametrical cross section of a first embodiment of a pressure difference regulator according to the invention having a membrane as a regulating device in a completely open operating position;
Fig. 6 a corresponding view of the same regulator in an almost completely closed operating position;
Figs. 7 and 8 views, which correspond to Figs. 5 and 6, of a second embodiment of a pressure difference regulator according to the invention having a piston made of metal or a plastic material as a regulating device; as well as
Fig. 9 a view corresponding to Fig. 8, in which the piston and the spindle are somewhat modified.

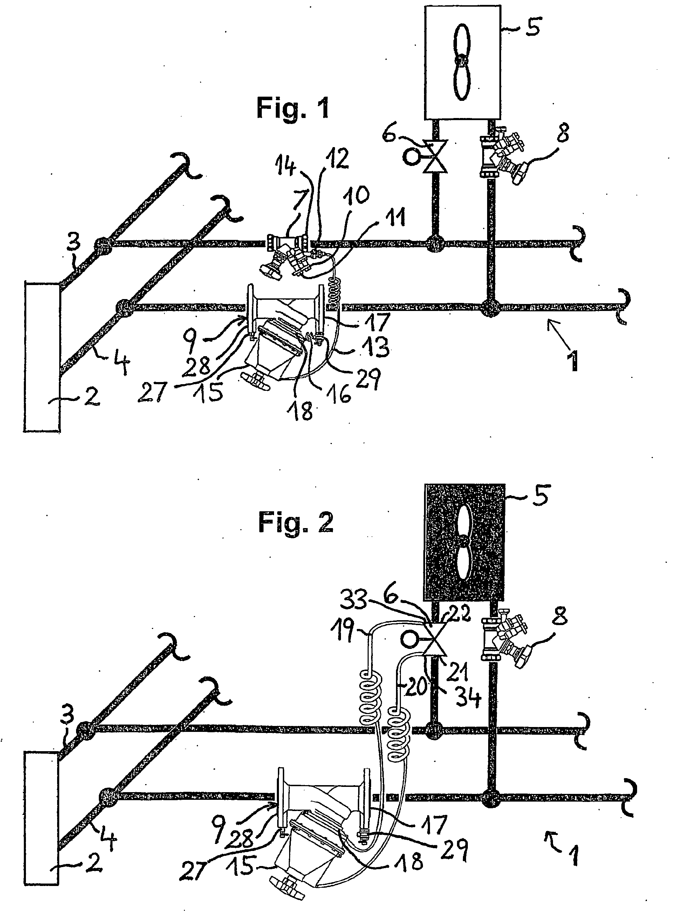

In the drawings, a circulating heating or cooling system is designated 1 in its entirety. It is shown in e.g. Figs. 1 and 2, that the system comprises a heating or cooling source 2 with a feed duct 3, outgoing from source 2, and a return or feed-back duct 4, returning to source 2, which ducts lead to consumption devices 5, such as radiators, convectors and the like. According to Fig.1, an e.g. thermostat-controlled control valve 6 adjacent a device 5 is mounted in the feed duct, which valve 6 is designed to precision control said device 5, and in front of it in the flow direction a guiding point 7, e. g. designed as a control valve with a measuring function, which guiding point is able to preadjust a loop flow, i.e. the flow to a plurality of devices 5. Also, in the return duct adjacent said device 5, an adjustment valve 8 is mounted and after it in the flow direction a pressure difference regulator 9.

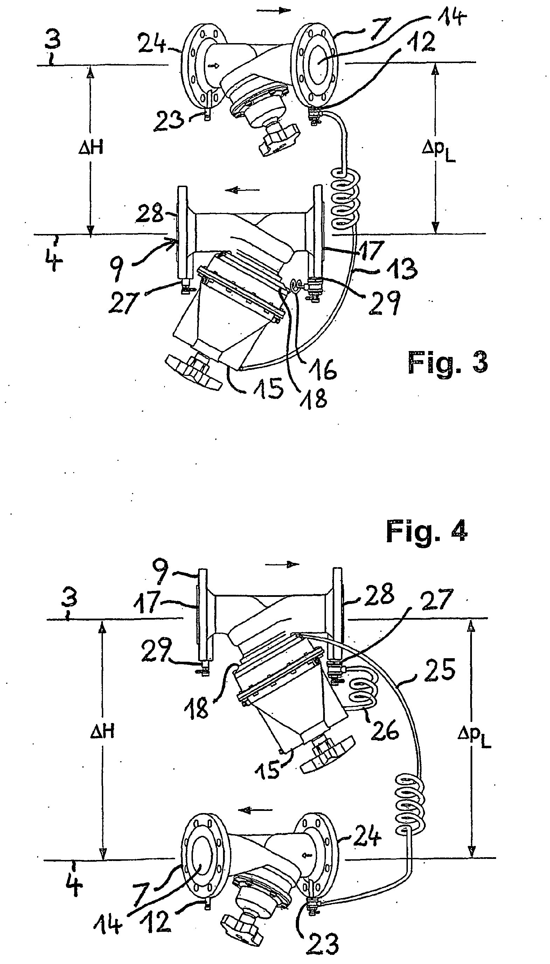

In a system 1 according to Fig. 1 or 3, a heated or cooled medium, e.g. water, flows in feed duct 3 from source 2 via guiding point 7 and control valve 6 to a consumption device 5, where heat is emitted or received, respectively. Ducts 3 and 4 may, as indicated, have various branches ahead of and after guiding point 7 and pressure difference regulator 9. At guiding point 7, a pressure difference measuring can be carried out for a flow calculation by temporary connection of a measuring instrument (not shown) to two nipples 10 and 11 (Fig. 1).

Also, the guiding point is used to connect a terminal 12, connected to its outlet 14, to a signaling duct 13, which leads to pressure difference regulator 9 on its high pressure regulating side 15 via a terminal 31. A signaling duct 16 also connects a terminal 29 at inlet 17 of the pressure difference regulator to low pressure regulation side 18 of the regulator via a terminal 32. The purpose of the signalling ducts is to keep the pressure difference between the feed duct and the return duct at point 7 and regulator 9 constant.

The system according to Fig. 2 corresponds to a high degree to the system according to Fig. 1, but the guiding point according to Fig. 1 has been omitted and, instead, signaling ducts 19 and 20 between a terminal 33 on outlet side 22 of control valve 6 and the low pressure regulating side of pressure difference regulator 9 and, respectively, between a terminal 34 on inlet side 21 of control valve 6 and the high pressure regulating side of difference pressure regulator 9 are used. Thus, in such a system the possibility of measuring the pressure difference and, consequently, the loop flow at point 7 is not used, but the control signals to the pressure difference regulator are taken from the control region at a consumption device or a series of consumption devices (not shown), connected to the same main line.

Pressure difference regulator 9 is the same in Figs. 1 and 2 apart from the signal duct connections.

Pressure difference regulator 9 is the same also in Figs. 3 and 4. Fig. 3 completely corresponds to the design in Fig. 1 apart from the fact, that guiding point 7 is designed in another way with signaling terminals 12 and 23 at the outlet side and at inlet 24, respectively. In Fig. 4, guiding point 7 and pressure difference regulator 9 have changed places between feed duct 3 and return duct 4, a signaling duct 25 connecting signaling terminal 23 of guiding point 7 on the inlet side to the low pressure regulating side of pressure difference regulator 9, whereas a signaling duct 26 connects a terminal 27 on outlet 28 of pressure difference re regulator 9 to high pressure regulating side 15 of the regulator via a terminal 30.

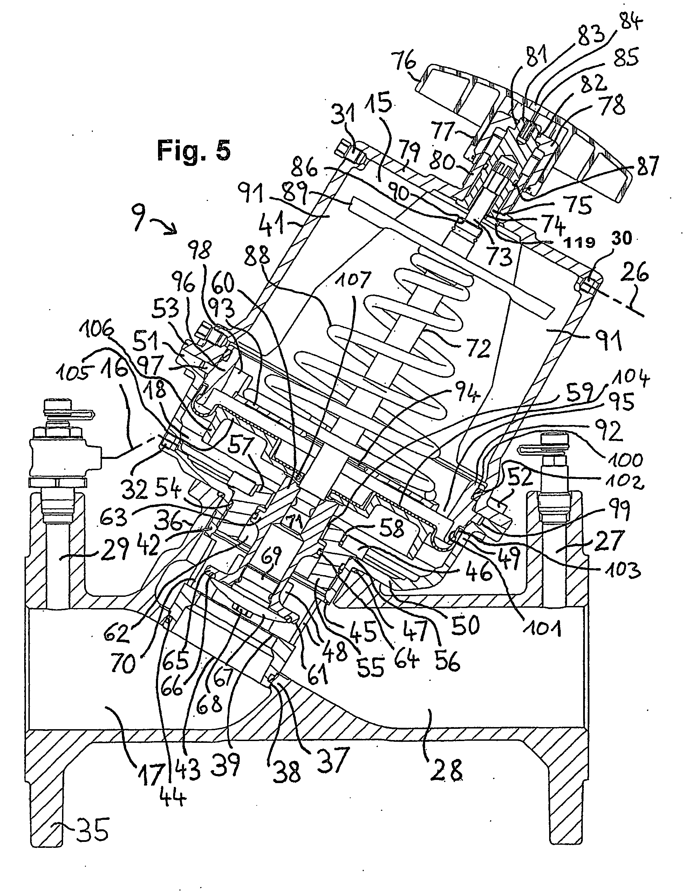

A pressure difference regulator 9 according to Figs. 5-8 has a housing 35 with a preferred oblique socket 36 between inlet 17 and outlet 28. The socket extends to a partition 37 between the inlet and the outlet, which partition has an opening 38 for a seat 39. A lower regulator part 40 is inserted, e.g. by screwing, into socket 36 and an upper regulator part 41 is fastened to the lower regulator part.

Lower regulator part 40 comprises a cage-like bottom part 42, which with its free end 43 with sealing engages all around an O-ring 44 in opening 38. Shoulder end 45 of bottom part 42 may be screwed into the outer end of socket 36 and an O-ring 47 may surround the socket mouth. A wall section with radial openings 48 between the two ends of bottom part 42 allows a medium to flow through the bottom part, seat 39 being mounted within the bottom part at the link between said wall section with openings and the free end of the bottom part, which is closed all around.

Immediately outside the outer socket end, a cup-like widened connection part 49 is connected to bottom part 42, which connection part with a radial shoulder 50 is supported by the free socket end, through which shoulder threaded bolts 46 can be inserted into the outer socket end as an alternative to threading in the bottom part, which connection part with its free end forms a projecting mounting collar 51 with axial holes (not shown) for mounting bolts 52, by means of which upper part 41 with a matching collar 53 and aligned holes (not shown) is fastened to lower part 40. As shown, a terminal 32 is provided in connection part 49, which also may house several such terminals, distributed around the periphery. Also the upper part of the regulator may be provided with a plurality of terminals 31 at various levels and in various radial directions in order to guarantee a complete deaeration in all possible installation positions. Terminals not used for signaling duct connection are plugged. Thus, the terminals suitably have a double function, i.e. for deairation and for signaling duct connection. Also, the terminals from the inlet and the outlet suitably have a multiple function, i.e. for the insertion of a test probe (not shown) and/or for signaling duct connection and possibly for the emptying and refilling, respectively, of a circulating medium and deairation, respectively, and these outlets are also completely or partially plugged, when they are not used.

Into shoulder end 45, a cage-like guiding part 55 is inserted by screwing and it is sealed by means of a surrounding O-ring 54 and is, compared to the bottom part, in the axial direction somewhat shorter and in the radial direction somewhat thicker and it further abuts with a small radial flange 56 the mouth area of the shoulder end. The rear end 57 of the guiding part has an exterior polygonal shape 58, designed to perform the screwing by means of a tool. Also, said rear end 57 is retracted in order to form a constriction 59, through which rear end 60 of a valve cone 61 is inserted. The wider inner part of the guiding part forms a guiding channel 62 for a flange-like expansion 63 on the cone with a recessed surrounding O-ring 64. Said retracted cone part forms a restriction for the opening movement of the cone.

Cone 61 suitably has an axial through hole and its free end is widened to a plate 65, the side of which, which faces seat 39, adjacent the periphery is provided with a recessed O-ring 66, against that part of which, which faces the axial central part, a suitably partially spherical clamping plate 67 with its peripheral part abuts. The clamping plate is by means of a threaded bolt 68 fastened to a holder 69, inserted into the free end of the cone. The clamping plate holds O-ring 66 in place and simultaneously squeezes out a portion of the O-ring material, which portion in an advantageous way being able to be pressed against seat 39 in a closing position. Parts 67-69 alternatively can form a unit, which is inserted by threading into the lower part of the cavity, which extends through the cone, bolt 68 having been replaced by a groove, a hexagonal part or the like, designed for tools to be inserted. Plate 65 is during its entire travel length at a distance surrounded by the wall section with openings 48, which at the same time forms a protective cage 70, which protects the entire cone and its sensitive parts during storage and shipping.

Such a construction solution with one unit, comprising a lower part with a bottom part and a seat disposed in it in a protected way as well as a cone, guided in the bottom part by means of a uniting, locking and controlling guiding part is very advantageous. Partly, this solution requires less machining of the housing, which consequently may be less expensive, partly the solution results in better flexibility as regards the combination and change of details, and partly said unit can be kept during repair work fastened to the housing free from the other regulator parts, which may be exchanged, adjusted etc. without the operation being interrupted. Finally, this solution is particularly important for an extremely precise machining, controlling and centering of all the details in relation to each other in general as well as of the spindle and the cone in relation to the seat in particular.

In the rear end of the cone, one end 71 of a spindle 72 is fastened, e.g. by screwing and/or by pressing, the other end 73 of the spindle preferably being designed with a polygonal shape and inserted into an opening 74, which has a shape, which matches the shape of end 73, in a bushing 75 in a handwheel 76, mounted outside said upper part and which in its turn has a non-rotation symmetrical sleeve part 77, into which a bushing 78 with a matching shape is fitted, which is threaded onto a neck 80, which projects from end 79 of said upper part and which in a bottom opening 81 with a lock ring 82 receives end 83 with a reduced diameter of bushing 75, which end is provided with a hexagonal opening or the like 85 accessible from outside through an opening 84 in the handwheel, for insertion of a hexagonal key or the like (not shown) to make bushing 75 rotate and thus also the spindle in relation to a prestressing device, described below, the handwheel not being rotated, since bushings 75 and 78 can be rotated in relation to each other. The purpose of the handwheel rotation is to, through the pitch of thread of the neck of the upper part and the axial adaptability of bushing 75 in relation to bushing 78, make bushing 75, with its inner end, abut a step 86 on the spindle and then displace the spindle in an axial direction, until the cone seals against the seat. Bushing 75 abuts in its shown end position with a flange 119 at its inner end against the end of the upper part and is, at its outer side, provided with a recessed O-ring 87 in order to seal against the neck of the upper part.

Said prestressing device comprises a compressing spring 88, e.g. a spiral spring, the small end of which adjacent the handwheel abuts a cross bar 89 as a spring tension means, which is threaded onto the spindle and which may be fastened by means of a locking device 90 in a groove in the spindle. The ends of cross bar 89 are secured against a rotation, since they are guided in lateral taperings 91 of the upper part.

The end of compression spring 88 close to the cone abuts a holder 92 with a radial plate 93 having a wide, central opening 94 to allow the spindle to pass through and along e.g. arc-shaped openings 95, distributed along the periphery , which plate is surrounded by a short axial ring wall 96 having an outer ring flange 97 and projections 98, distributed along the inner periphery, between openings 95 in order to center the compression spring. Flange 97 is fastened between a step 99 in mounting collar 51 and collar 53 of the upper part. Ring wall 96 has on both sides of flange 97 outer ring grooves 100 and 101, respectively, designed to receive O-rings or the like 102 and 103, respectively, which are designed to be pressed against the upper part and the lower part, respectively, adjacent the respective mounting collar. At least the O-ring, which is to be pressed against the upper part, is, besides the required sealing properties, regarding its material properties and/or its size together with the groove, which receives the O-ring, designed to perform the precise centering of the spring holder in relation to the upper part and via this part the lower part, i.e. the spring holder will fit into the upper part and possibly the lower part with a certain radial flexibility, said O-ring being designed to position all the parts, which cooperate with each other in the upper part and the lower part, opposite each other in an optimal way, i.e. without inclined positions and with minimal frictions for the required adjustment movements.

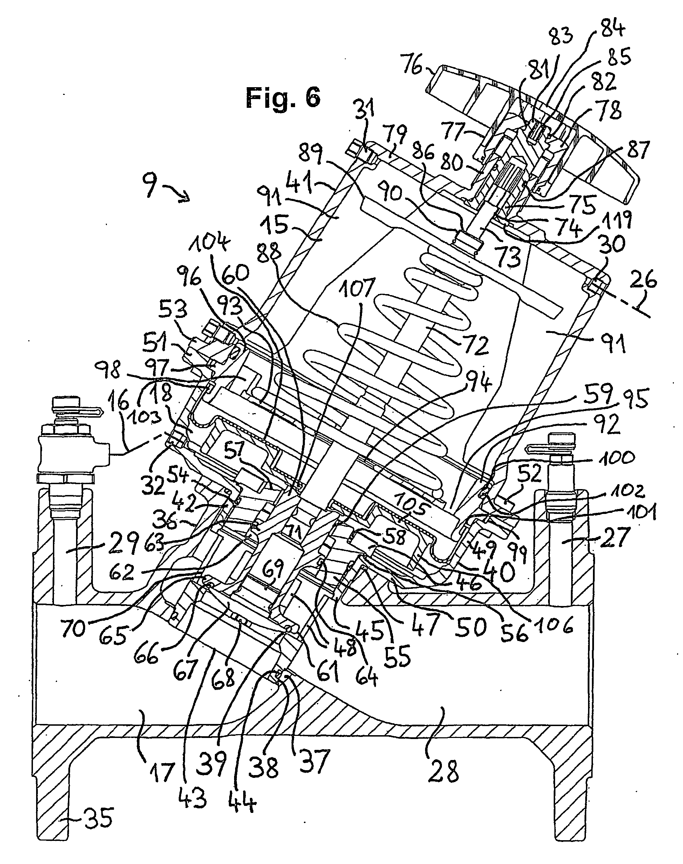

O-ring 103 is, according to Figs. 5 and 6, an end bead of a membrane 104, preferably made of rubber, reinforced with a fabric material. From the bead the membrane extends, at first in parallel to the cup-shaped wall of the lower part, in order to form the one side of a soft rounded fold 104, which then at a distance from said wall is bent upwards to a level, which is at about the same level as the level of the bead or slightly below it, the central parts of the membrane being supported by rotation-symmetrical support plates 105 having an outer border 106 and an inner cup part 107, which both extend towards the shoulder of the lower part. The cup part forms a recess in the support plate and the membrane follows this recess as well as the upper side of the plate and is fastened by curing of these parts. The bottom of the cup part comprises a central bore, designed to allow the spindle to pass through, the membrane being forced through this bore to end at a position on the border side of the bottom of the cup part. Finally, the rear end of the cone suitably has a slightly concave plate, which surrounds the spindle and is made of a friction reducing material, e.g. a fluorethane plastic material, since it must be easy for the spindle and the cone to be rotated in relation to the membrane and the support plate.

Fig. 6 shows, that the pressure difference between spaces 15 and 18 against the compression force of the compression spring has moved the membrane and the membrane plate and consequently also the cone to an almost completely closed valve position, the membrane suspension or bulging being increased, seen from the bead.

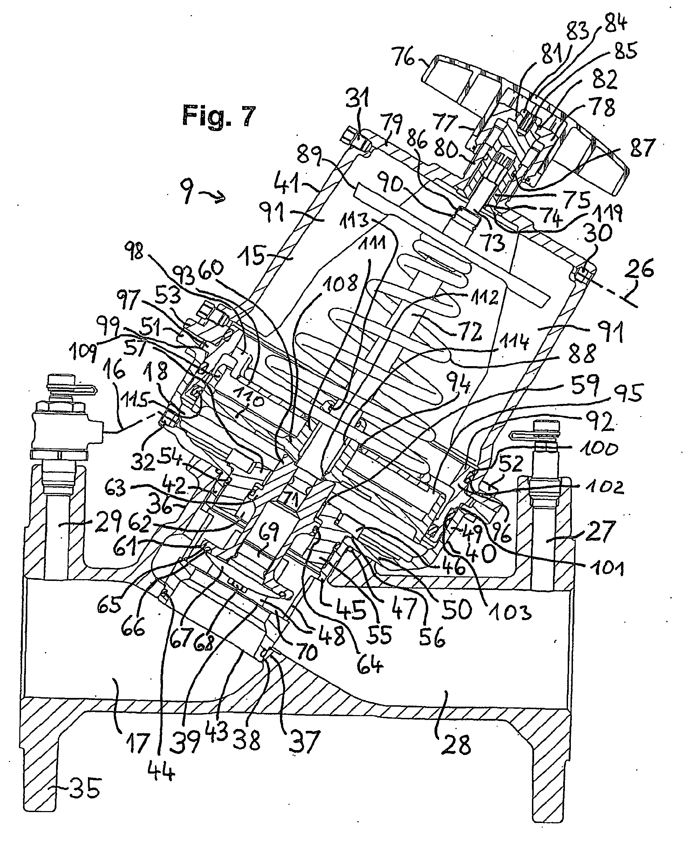

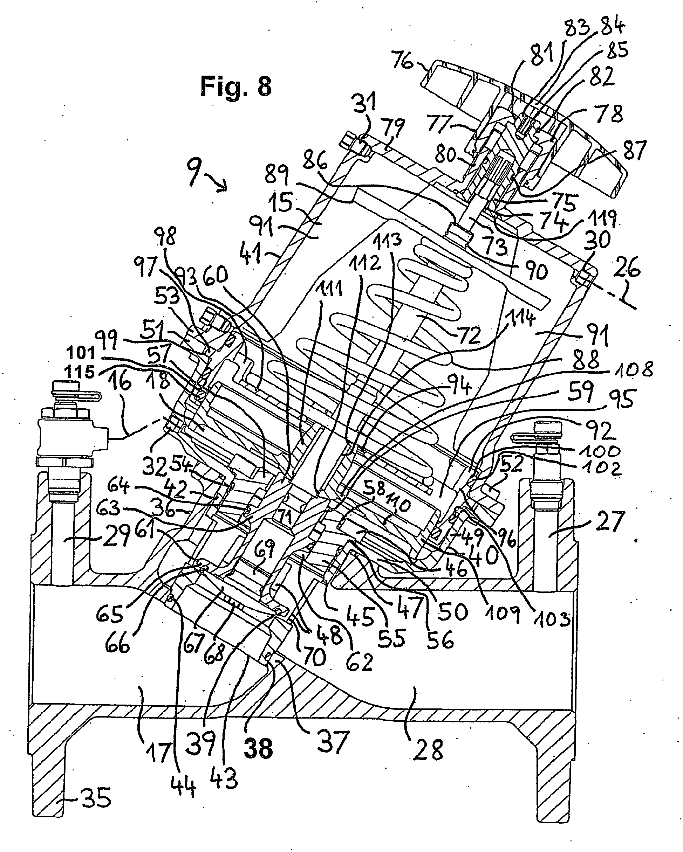

As an alternative to a membrane, Figs. 7 and 8 show a metal piston 108, which is designed as a relatively short cylinder 109 with a radial wall 110, the centre of which is designed as a hub 111, which surrounds the spindle and which preferably is at least as long as and preferably somewhat longer than the radial ring wall, the ends of the ring wall and the hub, which face the shoulder, being positioned at roughly the same level. Within this region, the hub surrounds the spindle with an opening 112 with a small play, which allows a certain swinging of the metal piston around the spindle, the other hub end being the swinging centre. In this other hub end,an O-ring 113 is received to seal against the spindle. Between the two hub ends, an annular gap 114 between the inner wall of the hub and the spindle is used to prevent a friction along this length and to generally minimize the friction against said O-ring and the minimal hub wall sections adjacent the ring and against a support region inside opening 112, which is not more than point-shaped. Cylinder 109 is guided by a relatively short extension of ring wall 96, which receives an O-ring 115. The extension houses the metal piston with a play and only has such a length, that the wall material will be sufficient to keep O-ring 15 in place. In this way, this metal piston is able to perform a limited swinging movement, which is very important in order to be able to eliminate centering problems and prevent squeezing and friction. In this way, a satisfactory function of this metal piston alternative is always secured. When such a design with a piston made of a metal or a plastic material is used, there is no need of a friction reducing plate at the rear end of the cone. The concave or convex recess within this region allows instead in an advantageous way swinging movements of the hub, and at the same time a cone, designed in this way, can be used for a membrane as well as a piston design.

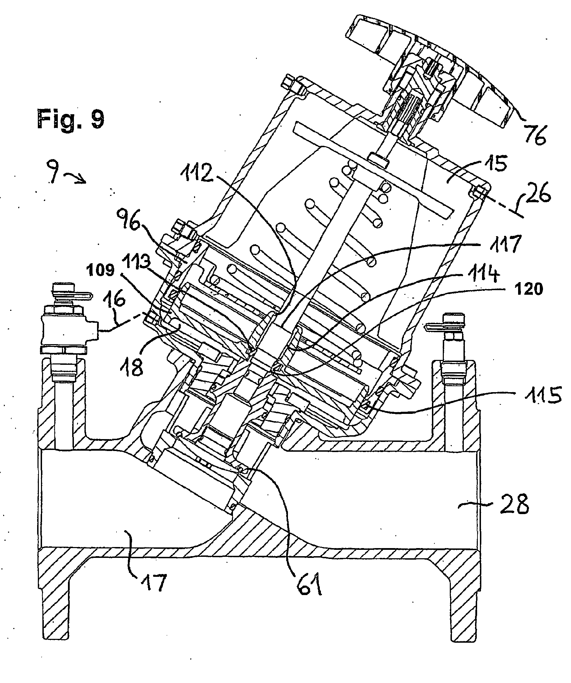

The embodiment according to Fig. 9 is different from the embodiment according to Fig. 8 only by reversion of the regions for an O-ring fastening in the hub. According to Fig. 9, the O-ring is positioned at the same level as the plate, whereas the upper or rear free hub end at a certain distance surrounds the spindle, which, when the plate goes against the cone, can present a step 117 all around with a reduction of the spindle diameter towards said cross bar. This step can allow a somewhat inwardly bent collar-shaped edge adjacent the free hub end to be positioned closer to the spindle. Also, within the region of the last-mentioned O-ring, the spindle may have a reduced diameter. Thus, in this design the swinging movement takes place around the center of the plate. It is also feasible to place an O-ring in the axial centre of the hub. Also, it may be advantageous to alter the diameter of the spindle in the longitudinal direction of the spindle in order to change the pressure on the O-ring of the hub. A smaller spindle diameter results in a small pressure on the O-ring, the latter and thus the piston being able to yield somewhat in the radial direction. See e.g. the position according to Fig. 9. If the piston then is displaced upwards in Fig. 9, the O-ring will be displaced into a spindle section having a larger diameter, where the O-ring will be compressed harder. Fig. 9 shows also an asymmetrical groove cross section for the O-ring with a shorter groove length in relation to the cone, which with a press ring 120, which corresponds to its rear end, in the shown position, goes against the O-ring and this renders a sealing in an axial direction possible.

It is of course also possible to mount O-rings in the two hub ends and/or in the middle of the axial length of the hub and/or through e.g. dimensioning and/or O-ring choice etc. achieve swinging possibilities around one of the hub ends or around the axial hub centre. It is very important, that a swinging movement on the whole is possible in order to facilitate precise centering and reduce friction.

The present invention is not limited to what has been described above and the embodiments shown in the drawings, but it can be supplemented and modified in an arbitrary fashion within the scope of the inventive idea and the following claims. Thus, the O-rings may have another cross-sectional design than a circular or oval cross section, e.g. an X-shaped design, and they can be made of another material than rubber, e.g. a fluorethene plastic material.

## Claims

1. An apparatus for controlling a pressure difference between a feed duct (3) and a return duct (4) in a heating or cooling system (1), said system (1) further comprising a heating or a cooling source (2); the feed duct (3) and the return duct (4) being connected to the source (2) with at least one consumption device (5) thereinbetween which emits or receives heat, at least a valve (6, 7, 8) being used to control the flow through the loop formed by the source (2), the feed duct (3), the at least one consumption device (5) and the return duct (4); a pressure difference regulator (9) being used to keep the pressure difference between the feed duct (3) and the return duct (4) constant; **characterized in that** the pressure difference regulator (9) is provided for being mounted in either one of said ducts (3 or 4) and is provided with signaling terminals (29 and 27 and 32 and 30, 31), connected to the inlet (17) and the outlet (28) of the regulator (9), respectively, as well as to its low pressure regulating side (18) and to its high pressure regulating side (15), respectively, whereby the at least one valve (6, 7, 8) mounted in the duct where the pressure difference regulator is not mounted, is also provided with signaling terminals (23, 24 and 12, 33), connected respectively to the inlet (24, 21) and outlet (14, 22) of the at least one valve, whereby the pressure difference regulator (9) is designed to be controlled via signaling ducts (13 and 16 and 19 and 20 and 25 and 26, respectively) between said terminals.

2. An apparatus according to claim 1, **characterized in that** in the feed duct (3) adjacent a consumption device (5) thermostat controlled control valve (6) is mounted, which is designed to precision control said device (5) and in front of it in the flow direction a guiding point (7), in the form of a control valve with a measuring function, which guiding point is useable for a preregulation of a loop flow, i.e. the flow to a plurality of devices (5), **in that** in the return duct (4) adjacent said device (5) an adjustment valve (8) is mounted and after it in the flow direction a pressure difference regulator (9), that a signaling wire (13) is connected to the outlet (14) of the guiding point via a terminal (12) and leads to a terminal (13) on the high pressure regulating side (15) of the pressure difference regulator (9), and that a signaling duct (16) connects a terminal (29) at the inlet (17) of the pressure difference regulator with a terminal (32) on the low pressure regulating side (18) of the regulator.

3. An apparatus according to claim 1, **characterized in that** in the feed duct (3) adjacent a consumption device (5) a thermostat controlled control valve (6) is mounted, which is designed to precision control said device (5), **in that** in the return duct (4) adjacent said device (5) an adjustment valve (8) is mounted and after it in the flow direction a pressure difference regulator (9), and **in that** signaling ducts (19,20) connect a terminal (33) on the outlet side (22) of the control valve (6) to a terminal (32) on the low pressure regulating side (18) of the pressure difference regulator (9) and a terminal (34) on the inlet side (21) of the control valve (6) to a terminal (31) on the high pressure regulating side (15) of the pressure difference regulator (9), respectively.

4. An apparatus according to any of claims 1-3, **characterized in that** the pressure difference regulator (9) is mounted in the return duct (4), whereas a guiding point (7) is mounted in the feed duct (3), a signaling duct (13) connecting the outlet (14) of the guiding point to the high pressure regulating side (15) of the regulator and another signaling duct (16) connecting the inlet (17) of the regulator to the low pressure regulating side (18) of the regulator, or that the pressure difference regulator (9) is mounted in the feed duct (3), whereas a guiding point (7) is mounted in the return duct (4), a signaling duct (26) connecting the outlet (28) of the regulator to the high pressure regulating side (15) of the regulator, whereas another signaling duct (25) connects the low pressure regulating side (18) of the regulator to the inlet (24) of the guiding point.

5. An apparatus according to any of claims 1-4, **characterized in that** the pressure difference regulator (9) has a housing (35) with a socket (36), preferably oblique, between its inlet (17) and its outlet (28), that the socket extends to a partition (37) between the inlet and the outlet, which partition has an opening (38) for a seat (39), that in the socket a lower part (40) of the regulator is inserted and preferably fastened by screwing by means of bolts (46), on which lower part an upper part (41) of the regulator is fastened, that the lower part (40) of the regulator comprises a cage-like bottom part (42), its free end (43), all around with sealing by means of an O-ring (44), being inserted into the opening of the partition, the bottom part with its shoulder end being pressed into or screwed into the outer end of the socket, preferably with an O-ring (47), which surrounds the mouth of the socket, that between the two ends of the bottom part (42) a wall section with radial openings (48) is provided, which allows a flow to pass through the bottom part, and that the seat (39) is mounted within the bottom part at the transition region between said wall section with an opening and a free end of the bottom part, which is closed all around.

6. An apparatus according to claim 5, **characterized in that** immediately outside the outer socket end, the bottom part (42) changes to a cup-like widened connection part (49), which with a radial shoulder (50) is supported by the free socket end and preferably is fastened to it through bolts (46), and which with its free end forms a projecting mounting collar (51) with axial holes for mounting bolts (52), by means of which the upper part (41) with a matching collar (53) and opposite axial holes is fastened to the lower part (40), and that the lower part (40) as well as the upper part (41) are provided with terminals (30,31,32) at various levels and/or in various radial directions for deaeration and/or signaling duct connection.

7. An apparatus according to claim 6, **characterized in that** in the shoulder end (45), a guiding part (55) is inserted by screwing and sealed by means of a surrounding O-ring (54), which guiding part with a radial flange (56) abuts the mouth region of the shoulder end and the rear end (57) of which is designed to receive a tool and is bent inwards in order to form an inner constriction (59), through which the rear end (60) of a valve cone (61) is inserted, that the wide inner part of the guiding part forms a guiding channel (62) for a flange-like expansion (63) on the cone with a recessed surrounding O-ring (64), and that said inwardly bent cone part forms a limitation for the opening movement of the cone.

8. An apparatus according to claims 1-7, **characterized in that** the cone (61) suitably has through axial holes, that its free end is widened into a plate (65), the side of which, which faces the seat (39), adjacent the periphery is provided with a recessed O-ring (66), against that part of which, which faces the axial central part , a suitably partly spherical clamping plate (67) with its peripheral part abuts, that the clamping plate by means of a threaded bolt (68) is fastened to a holder (69), inserted into the free end of the cone, or that the clamping plate (67), the holder (69) and a part (68) for tool insertion form a unit, which can be inserted into the cone, and that the plate (65) during its entire stroke at a distance is surrounded by a wall section of the bottom part with openings (48), which also forms a protective cage (70) around the sensitive parts of the cone and the seat (39) during storage and shipping.

9. An apparatus according to claim 7 or 8, **characterized in that** in the rear end of the cone one end (71) of a spindle (72) is fastened, by screwing and/or pressing, the other end (73) of the spindle preferably having a polygonal shape and being inserted into an opening (74), which fits said other end, in a bushing (75) in a handwheel (76), mounted outside the upper part and which in its turn has a non-rotation symmetrical housing (77), in which a handwheel bushing (78) is inserted, which fits said part and which is threaded onto a neck (80), which projects from the end (79) of the upper part and which in a bottom opening (81) with a locking ring (82) receives the preferably diameter-reduced end (83) of the spindle bushing (75), which end is provided with a hexagonal opening or the like (85), accessible through an opening (84) in the handwheel, which opening is designed to receive a tool, which will rotate the spindle bushing and consequently also the spindle in relation to a prestressing device without causing the handwheel to rotate, that the rotation of the handwheel is provided to make, by the pitch of thread on the neck of the upper part and the axial adaptability of the spindle bushing (75) in relation to the bushing (78), the spindle bushing (75) with its inner end abut a step (86) on the spindle in order to displace the spindle in an axial direction, until the cone seals against the seat, and that the spindle bushing (75) in its pushed-out end position abuts with a flange (119) at its inner end the end of the upper part and on its outer side is provided with a recessed O-ring (87) in order to seal against the neck of the upper part.

10. An apparatus according to claim 9, **characterized in that** said prestressing device includes a compression spring (88), in the form of a spiral spring, the small end of which adjacent the handwheel abuts a cross bar (89) as a spring tension-device, which is threaded onto the spindle and which preferably is secured outside the thread by means of a locking device (90) in a groove in the spindle, that the ends of the cross bar (89) are secured against a rotation by guiding them in lateral taperings (91) of the upper part, and that the end of the compression spring (88) adjacent the cone abuts a holder (92) with a radial plate (93) with a wide, central opening (94) for the spindle to pass through and with circular arc-shaped openings (95), preferably distributed along the periphery.

11. An apparatus according to claim 10, **characterized in that** the plate is surrounded by a short axial ring wall (96) with an outer ring flange (97) and preferably along the inner periphery distributed projections (98) between the plate openings (95) in order to center the compression spring, that the ring flange is fastened between a step (99) in the mounting collar (51) and the collar (53) of the upper part, and that the ring wall (96) has outer annular grooves (100 and 101, respectively) on both sides of the ring flange to receive O-rings or the like (102 and 103, respectively), which abut the upper part and the lower part, respectively, adjacent the respective mounting collar.

12. An apparatus according to claim 11, **characterized in that** the O-ring (103) of the ring wall, which abuts the lower part is an end bead of a membrane (104), preferably made of rubber, reinforced with a fabric material, that from the bead the membrane extends at first in parallel to the cup-shaped wall of the lower part in order to obtain the one side of a soft rounded fold (104), which then at a distance from said wall is bent upwards to a level, which is about the same as the level of the bead or somewhat lower, where the central parts of the membrane are supported by a rotation symmetrical support plate (105), preferably with an outer border (106) and an inner cup part (107), which both extend towards the shoulder of the lower part, that the cup part forms a recess in the support plate and the membrane follows said recess as well as outer upper side of the plate and is fastened by vulcanization on these parts, that in the bottom of the cup part a central bore is provided, designed to let the spindle pass through, the membrane preferably being pressed through this bore and ending at a short distance from the lower side of the bottom of the cup part, and that the rear end of the cone suitably has a slightly concave or conic surface and receives a sliding plate, which surrounds the spindle and is made of a friction reducing material, e.g. a fluorethene plastic material.

13. An apparatus according to claim 11, **characterized in that** as a regulating device between the high and the low pressure regulating side (15 and 18, respectively) a piston (108) made of metal and/or a plastic material is used, which is a relatively short cylinder (109) with a radial wall (110), the centre of which is a hub (111), which surrounds the spindle, which hub preferably has the same length as and preferably is somewhat longer than the radial ring wall, the ends of the ring wall and the hub, which face the shoulder, being positioned at roughly the same level, that the hub between its ends surrounds the spindle with a relatively wide annular gap (114), that at least the inner opening (112) of the one hub end has a larger diameter than the spindle, that in at least one of said inner hub openings and/or in the axial middle area of the hub an O-ring (113) is recessed, which allows a certain swinging of the piston around the spindle to occur, the other hub end and the axial hub centre, respectively, being used as a swinging centre.

14. An apparatus according to claim 13, **characterized in that** the cylinder (109) is guided by a relatively short extension of the ring wall (96), in which an O-ring (115) is recessed, that the extension houses the piston with a play and has such a length, that the wall material will be sufficient to keep the O-ring (115) in place and to allow the swinging movement of the piston within the peripheral area to be carried out.

15. An apparatus according to claim 13 or 14, **characterized in that** the spindle diameter varies in the longitudinal direction of the spindle within the region of the movement of the O-ring (113) of the piston, which abuts the spindle, in order to vary the pressure on this ring, and/or that this ring is mounted in a groove with an asymmetrical cross section with a short groove wall in relation to the cone, which with a press ring (120), the shape of which fits the rear end of the cone, is designed to abut the O-ring and have a sealing effect in the axial direction.

## Patentansprüche

1. Vorrichtung zur Steuerung eines Druckunterschiedes zwischen einer Zufuhrleitung (3) und einer Rückführleitung (4) in einem Heiz- oder Kühlsystem (1) mit einer Wärme- oder Kühlquelle (2); die Zufuhrleitung (3) und die Rückführleitung (4) ist mit der Quelle (2) mit mindestens einem Verbraucher (5) dazwischen verbunden, der Wärme empfängt oder ausstrahlt, wobi mindestens ein Ventil (6, 7, 8) zur Steuerung des Flusses durch die Schleife dient, die von der Quelle (2) gebildet wird, von der Zufuhrleitung (3), dem mindestens einen Verbraucher (5) und der Rückführleitung (4); wobei ein Druckunterschiedsregler (9) benutzt wird, um den Druckunterschied zwischen der Zufuhrleitung (3) und der Rückführleitung (4) konstant zu halten; **gekennzeichnet dadurch, dass** der Druckunterschiedsregler (9) in eine der Rohrleitungen (3 oder 4) montiert wird und mit Signalausgängen (29 und 27 und 32 und 30, 31) ausgestattet ist, verbunden mit dem Einlass (17) bzw. dem Auslass (28) des Reglers (9) sowie seiner Niederdruckregulierungsseite (18) bzw. seiner Hochdruckregulierungsseite (15), wodurch das mindestens eine Ventil (6, 7, 8), das in derjenige Leitung montiert ist, wo der Druckunterschiedsregler nicht montiert ist, auch mit Signalausgängen (23, 24 und 12, 33) ausgestattet ist, verbunden mit dem Einlass (24.21) bzw. Auslass (14, 22) des mindestens einen Ventils, wodurch der Druckunterschiedsregler (9) durch Signalleitungen (13 und 16 und 19 und 20 und 25 und 26) zwischen besagten Ausgängen kontrolliert werden soll.

2. Vorrichtung nach Anspruch 1, **gekennzeichnet dadurch, dass** in der Zufuhrleitung (3) anliegend an einen Verbraucher (5) ein thermostatkontrolliertes Steuerventil (6) montiert ist, zur Präzisionssteuerung der Vorrichtung (5), und davor in Flussrichtung ein Führungspunkt (7) in Form von einem Steuerventil mit Messfunktion, wobei der Führungspunkt zur Vorregulierung eines Ringflusses dient, d. h. der Fluss zu einer Vielzahl von Vorrichtungen (5), **dadurch** dass in der Rückführleitung (4) neben der Vorrichtung (5) ein Einstellventil (8) montiert ist und dahinter in Flussrichtung ein Druckunterschiedsregler (9), dass ein Signaldraht (13) mit dem Auslass (14) des Führungspunkts durch einen Anschluss (12) verbunden ist und zu einem Anschluss (13) an der Hochdruckregulierungsseite (15) des Druckunterschiedsreglers (9) führt, und dass eine Signalleitung (16) einen Anschluss (29) am Einlass (17) des Druckunterschiedsreglers mit einem Anschluss (32) an der Niederdruckregulierungsseite (18) des Reglers verbindet.

3. Vorrichtung nach Anspruch 1, **gekennzeichnet dadurch, dass** in die Zufuhrleitung (3) anliegend an ein Verbraucher (5) ein thermostatkontrolliertes Steuerventil (6) montiert ist, zur Präzisionssteuerung der Vorrichtung (5), **dadurch**, dass in die Rückführleitung (4) neben der Vorrichtung (5) ein Einstellventil (8) montiert ist und dahinter in Flussrichtung ein Druckunterschiedsregler (9), und **dadurch**, dass Signalleitungen (19.20) einen Anschluss (33) an der Auslassseite (22) des Steuerventils (6) mit einem Anschluss (32) an der Niederdruckregulierungsseite (18) des Druckunterschiedsreglers (9) verbinden bzw. einen Anschluss (34) an der Einlassseite (21) des Steuerventils (6) mit einem Anschluss (31) an der Hochdruckregulierungsseite (15) des Druckunterschiedsreglers (9).

4. Vorrichtung nach einem beliebigen der Ansprüche 1-3, **gekennzeichnet dadurch, dass** der Druckunterschiedsregler (9) in der Rückführleitung (4) montiert ist, während ein Führungspunkt (7) in der Zufuhrleitung (3) montiert ist, wobei eine Signalleitung (13) den Auslass (14) des Führungspunkts mit der Hochdruckregulierungsseite (15) des Reglers verbindet und ein andere Signalleitung (16) den Einlass (17) des Reglers mit der Niederdruckregulierungsseite (18) des Reglers verbindet, oder dass der Druckunterschiedsregler (9) in der Zufuhrleitung (3) montiert ist, während ein Führungspunkt (7) in der Rückführleitung (4) montiert ist, wobei eine Signalleitung (26) den Auslass (28) des Reglers mit der Hochdruckregulierungsseite (15) des Reglers verbindet, während eine andere Signalleitung (25) die Niederdruckregulierungsseite (18) des Reglers mit dem Einlass (24) des Führungspunkts verbindet.

5. Vorrichtung nach einem beliebigen der Ansprüche 1-4, **gekennzeichnet dadurch, dass** der Druckunterschiedsregler (9) ein Gehäuse (35) mit einer Steckdose (36) hat, vorzugsweise schräg, zwischen seinem Einlass (17) und seinem Auslass (28), dass die Steckdose sich bis zu einer Trennwand (37) zwischen dem Einlass und dem Auslass erstreckt, wobei die Trennwand eine Öffnung (38) für eine Aufnahme (39) hat, dass in die Steckdose ein Unterteil (40) des Reglers eingefügt wird und vorzugsweise durch Einschrauben mittels Bolzen (46) befestigt wird, wobei auf dem Unterteil ein Oberteil (41) des Reglers befestigt ist, dass das Unterteil (40) des Reglers ein käfigähnliches Bodenteil (42) umfasst, wobei sein freies Ende (43), ganz herum mit Dichtung mittels eines 0-Rings (44), in die Öffnung der Trennwand eingefügt wird, das Bodenteil mit seinem Schulterende wird in das Außenende der Steckdose gedrückt oder geschraubt, vorzugsweise mit einem 0-Ring (47), der die Öffnung der Steckdose umgibt, dass zwischen den beiden Enden des Bodenteils (42) ein Wandquerschnitt mit radialen Öffnungen (48) vorgesehen ist, so dass eine Strömung durch das Bodenteil geht, und dass die Aufnahme (39) innerhalb des Bodenteils im Übergangsbereich zwischen dem Wandquerschnitt mit einer Öffnung und einem freien Ende des Bodenteils montiert wird, das ganz umschlossen ist.

6. Vorrichtung nach Anspruch 5, **gekennzeichnet dadurch, dass** direkt außerhalb des äußeren Steckdosenendes das Bodenteil (42) zu einem kappenähnlich erweiterten Verbindungsteil (49) wird, das mit einer radialen Schulter (50) durch das freie Steckdosenende gestützt wird und vorzugsweise durch Bolzen (46) daran befestigt ist, und das mit seinem freien Ende einen vorspringenden Montagekragen (51) mit axialen Bohrungen zum Montieren von Bolzen (52) bildet, wodurch das Oberteil (41) mit einem passenden Kragen (53) und gegenüberliegenden axialen Bohrungen an dem Unterteil (40) befestigt ist, und dass das Unterteil (40) sowie das Oberteil (41) mit Anschlüssen (30.31.32) auf verschiedenen Ebenen und/oder in verschiedenen radialen Richtungen zur Entlüftung und/oder Signalleitungsverbindung ausgestattet ist.

7. Vorrichtung nach Anspruch 6, **gekennzeichnet dadurch, dass** in das Schulterende (45) ein Führungsteil (55) eingeschraubt und mittels eines umliegenden 0-Rings (54) abgedichtet ist, wobei das Führungsteil mit einem radialen Flansch (56) an den Öffnungsbereich des Schulterendes anschlägt und dessen Hinterende (57) ein Werkzeug aufnehmen soll und nach innen gebogen ist, um eine innere Engstelle (59) zu bilden, durch die das Hinterende (60) eines Ventilkegels (61) eingefügt wird, dass der weite innere Teil des Führungsteils einen Führungskanal (62) für eine flanschähnliche Ausdehnung (63) auf dem Konus mit einem ausgesparten umliegenden 0-Ring (64) bildet, und dass das nach innen gebogene Konusteil eine Beschränkung für die Öffnungsbewegung des Konus bildet.

8. Vorrichtung nach Anspruch 1-7, **gekennzeichnet dadurch, dass** der Konus (61) zweckmäßigerweise axiale Durchgangsbohrungen hat, dass sein freies Ende zu einer Platte (65) erweitert ist, deren Seite, die der Aufnahme (39) gegenüberliegt, am Umfang mit einem ausgesparten 0-Ring (66) ausgestattet, gegen dessen dem axialen zentralen Teil gegenüberliegendes Teil eine zweckmäßigerweise teilweise kugelförmige Klemmplatte (67) mit ihrem Randteil anschlägt, dass die Klemmplatte mittels eines Gewindebolzens (68) an einem Halter (69) befestigt ist, der in das freie Ende des Konus eingefügt ist, oder dass die Klemmplatte (67), der Halter (69) und ein Teil (68) zur Werkzeugeinfügung eine Einheit bilden, die in den Konus eingefügt werden kann, und dass die Platte (65) während ihre ganzen Hubes in einem Abstand von einem Wandabschnitt des Bodenteils mit Öffnungen (48) umschlossen ist, der auch einen Schutzkäfig (70) um die empfindlichen Teile des Konus und die Aufnahme (39) herum während der Lagerung und des Versands bildet.

9. Vorrichtung nach Anspruch 7 oder 8, **gekennzeichnet dadurch, dass** am Hinterende des Konus ein Ende (71) einer Spindel (72) befestigt ist, durch Einschrauben und/oder Drücken, das andere Ende (73) der Spindel vorzugsweise mehreckig ist und in eine Öffnung (74) eingefügt wird, in die besagtes anderes Ende passt, in einer Buchse (75) in einem Handrad (76), außerhalb des Oberteils montiert und die ihrerseits ein nicht rotationssymmetrisches Gehäuse (77) hat, in die eine Handradbuchse (78) eingefügt wird, die in besagtes Teil passt und die auf einen Hals (80) aufgeschraubt ist, der von dem Ende (79) des Oberteils vorspringt und der in einer Bodenöffnung (81) mit einer Schraubklemme (82) das vorzugsweise im Durchmesser verringerte Ende (83) der Spindelbuchse (75) empfängt, wobei das Ende mit einer sechseckigen Öffnung ausgestattet ist oder Ähnlichem (85), zugänglich durch eine Öffnung (84) in dem Handrad, wobei die Öffnung ein Werkzeug aufnehmen soll, das die Spindelbuchse und folglich auch die Spindel in Bezug auf eine Vorspannvorrichtung rotieren lässt, ohne dass das Handrad rotiert, dass durch die Rotation des Handrades, durch die Steigung des Gewindes auf dem Hals des Oberteils und die axiale Anpassungsfähigkeit der Spindelbuchse (75) in Bezug auf die Buchse (78), die Spindelbuchse (75) mit ihrem inneren Ende an eine Stufe (86) auf der Spindel anschlägt, um die Spindel in einer axialen Richtung zu versetzen, bis der Konus gegen die Aufnahme abdichtet, und dass die Spindelbuchse (75) in ihrer ausgezogenen Endposition mit einem Flansch (119) an ihrem inneren Ende an das Ende des Oberteils anschlägt und an ihrer Außenseite mit einem ausgesparten 0-Ring (87) ausgestattet ist, um gegen den Hals des Oberteils abzudichten.

10. Vorrichtung nach Anspruch 9, **gekennzeichnet dadurch, dass** besagte Vorspannvorrichtung eine Druckfeder (88) umfasst, in Form einer Spiralfeder, deren kleines Ende anliegend an das Handrad an eine Querstange (89) als Federspannvorrichtung anschlägt, die auf die Spindel geschraubt ist und vorzugsweise außerhalb des Gewindes mittels einer Schließvorrichtung (90) in einer Nut in der Spindel befestigt ist, dass die Enden der Querstange (89) gegen Rotation gesichert werden, indem man sie in seitlichen Verjüngungen (91) des Oberteils führt, und dass das Ende der Druckfeder (88) anliegend an den Konus an einen Halter (92) mit einer radialen Platte (93) mit einer weiten, zentralen Öffnung (94) anschlägt, durch die die Spindel geht, und mit runden bogenförmigen Öffnungen (95), die vorzugsweise entlang dem Umfang verteilt sind.

11. Vorrichtung nach Anspruch 10, **gekennzeichnet dadurch, dass** die Platte durch eine kurze axiale Ringwand (96) mit einem Außenringflansch (97) umschlossen ist und vorzugsweise entlang dem innere Umfang verteilte Vorsprünge (98) zwischen den Plattenöffnungen (95), um die Druckfeder zu zentrieren, dass der Ringflansch zwischen einer Stufe (99) in dem Montagekragen (51) und dem Kragen (53) des Oberteils befestigt ist, und dass die Ringwand (96) ringförmige Außenrillen (100 und 101) auf beiden Seiten des Ringflanschs aufweist, um 0-Ringe oder Ähnliches (102 und 103) aufzunehmen, die an das Oberteil bzw. das Unterteil anschlagen, anliegend an den betreffenden Montagekragen.

12. Vorrichtung nach Anspruch 11, **gekennzeichnet dadurch, dass** der 0-Ring (103) der Ringwand, die an das Unterteil anschlägt, eine Endverstärkungsrippe einer Membran (104) ist, vorzugsweise aus Gummi und mit einem Stoff verstärkt, dass die Membran sich von der Verstärkungsrippe zuerst parallel zu der kappenförmigen Wand des Unterteils erstreckt, um eine Seite einer weichen abgerundeten Falte (104) zu erhalten, die dann in einem Abstand von besagter Wand nach oben zu einer Höhe gebogen wird, die ungefähr dieselbe ist wie die Höhe der Verstärkungsrippe oder etwas niedriger, wobei die zentralen Teile der Membran durch eine rotationssymmetrische Stützplatte (105) gestützt werden, vorzugsweise mit einem Außenrand (106) und einem inneren Kappenteil (107), die sich beide bis zur Schulter des Unterteils erstrecken, dass das Kappenteil eine Vertiefung in der Stützplatte bildet und dass die Membran besagter Vertiefung sowie der Außenoberseite der Platte folgt und durch Vulkanisation an diesen Teilen befestigt ist, dass am Boden des Kappenteils eine zentrale Bohrung vorgesehen ist, damit die Spindel hindurchgeht, die Membran vorzugsweise durch diese Bohrung gedrückt wird und in kurzem Abstand von der unteren Seite des Bodens des Kappenteils endet, und dass das Hinterende des Konus zweckmäßigerweise eine leicht konkave oder konische Oberfläche hat und eine Gleitplatte empfängt, die die Spindel umgibt und aus einem reibungsreduzierenden Material hergestellt ist, z.B. einem Fluorethenkunststoff.

13. Vorrichtung nach Anspruch 11, **gekennzeichnet dadurch, dass** als Regelvorrichtung zwischen der Hoch- und der Niederdruckregulierungsseite (15 und 18) ein Kolben (108) aus Metall und/oder einem Kunststoff benutzt wird, der ein verhältnismäßig kurzer Zylinder (109) mit einer radialen Wand (110) ist, dessen Mitte eine Nabe (111) ist, die die Spindel umgibt, wobei die Nabe vorzugsweise dieselbe Länge hat wie und vorzugsweise etwas länger ist als die radiale Ringwand, wobei die Enden der Ringwand und die Nabe, die der Schulter gegenüberliegen, ungefähr auf derselben Höhe ligen, dass die Nabe zwischen ihren Enden die Spindel mit einer verhältnismäßig weiten ringförmigen Lücke (114) umgibt, dass mindestens die innere Öffnung (112) des einen Nabenendes einen breiteren Durchmesser als die Spindel hat, dass in mindestens einer der inneren Nabenöffnungen und/oder in dem axialen Mittenbereich der Nabe ein 0-Ring (113) ausgespart ist, der eine bestimmte Schwingung des Kolbens um die Spindel erlaubt, wobei die anderen Nabenenden und die axiale Nabenmitte jeweils als Schwingungszentrum verwendet wird.

14. Vorrichtung nach Anspruch 13, **gekennzeichnet dadurch, dass** der Zylinder (109) durch eine verhältnismäßig kurze Verlängerung der Ringwand (96) geführt wird, in der ein 0-Ring (115) ausgespart ist, dass die Ausdehnung den Kolben mit einem Spielraum aufnimmt und eine solche Länge hat, dass das Wandmaterial ausreicht, um den 0-Ring (115) an Ort und Stelle zu halten und um die Schwingbewegung des Kolbens innerhalb des Randbereichs durchzuführen.

15. Vorrichtung nach Anspruch 13 oder 14, **gekennzeichnet dadurch, dass** der Spindeldurchmesser in Längsrichtung der Spindel innerhalb des Bereichs der Bewegung des 0-Rings (113) des Kolbens variiert, der an die Spindel anschlägt, um den Druck auf diesen Ring zu variieren, und/oder dass diese Ring in eine Nut mit einem asymmetrischen Querschnitt mit einer kurzen Nutwand in Bezug auf den Konus montiert wird, der mit einem Pressring (120), dessen Form um das Hinterende des Konus passt, an den 0-Ring anschlagen und eine Dichtungswirkung in der axialen Richtung haben soll.

## Revendications

1. Appareil de contrôle d'une différence de pression entre un conduit d'alimentation (3) et un conduit de retour (4) dans un système de chauffage ou de refroidissement (1), ledit système (1) comprenant en outre une source de chauffage ou de refroidissement (2); le conduit d'alimentation (3) et le conduit de retour (4) étant connectés à la source (2) avec au moins un dispositif de consommation (5) entre ceux-ci qui émet ou reçoit de la chaleur, au moins une vanne (6, 7, 8) étant utilisée pour contrôler le débit à travers la boucle formée par la source (2), le conduit d'alimentation (3), au moins l'un des dispositifs de consommation (5) et le conduit de retour (4); un régulateur de différence de pression (9) étant utilisé pour maintenir constante la différence de pression entre le conduit d'alimentation (3) et le conduit de retour (4); **caractérisé en ce que** le régulateur de différence de pression (9) est destiné à être monté soit dans l'un desdits conduits (3 ou 4) et est pourvu de bornes de signalisation (29 et 27 et 32 et 30, 31), connectées à l'entrée (17) et à la sortie (28) du régulateur (9), respectivement, ainsi qu'à son côté de réglage à basse pression (18) et à son côté de réglage à haute pression (15), respectivement, où au moins une des vannes (6, 7, 8) montée dans le conduit où le régulateur de différence de pression n'est pas monté, est également pourvu de bornes de signalisation (23, 24 et 12, 33), connectées respectivement à l'entrée (24.21) et à la sortie (14, 22) d'au moins une des vannes, où le régulateur de différence de pression (9) est conçu pour être contrôlé par des conduites de signalisation (13 et 16 et 19 et 20 et 25 et 26, respectivement) entre lesdites bornes.

2. Appareil selon la revendication 1, **caractérisé en ce que** dans le conduit d'alimentation (3) adjacent est montée une vanne de contrôle de thermostat contrôlé (6) d'un dispositif de consommation (5), qui est conçue pour un contrôle précis dudit dispositif (5) et en face de ce dernier, dans la direction de débit un point de guidage (7), en forme de vanne de contrôle avec une fonction de mesurage, lequel point de guidage peut être utilisé pour un préréglage d'un débit en boucle, c'est-à-dire du débit d'une pluralité de dispositifs (5), **en ce que** dans le conduit de retour (4) adjacent audit dispositif (5) une vanne de réglage (8) est montée et après cela dans la direction de débit un régulateur de différence de pression (9), **en ce qu'**un câble métallique de signalisation (13) est connecté à la sortie (14) du point de guidage par une borne (12) et se dirige vers une borne (13) sur le côté de réglage à haute pression (15) du régulateur de différence de pression (9), et qu'un conduit de signalisation (16) connecte une borne (29) à l'entrée (17) du régulateur de différence de pression avec une borne (32) sur le côté de réglage à basse pression (18) du régulateur.

3. Appareil selon la revendication 1, **caractérisé en ce que** dans le conduit d'alimentation (3) adjacent est montée une vanne de contrôle de thermostat contrôlé (6) d'un dispositif de consommation (5), qui est conçue pour le contrôle précis dudit dispositif (5), **en ce que** dans le conduit de retour (4) adjacent audit dispositif (5) est montée une vanne de régulation (8), puis, dans la direction de débit un régulateur de différence de pression (9), et **en ce que** des conduits de signalisation (19, 20) connectent une borne (33) sur le côté de sortie (22) de la vanne de contrôle (6) à une borne (32) sur le côté de réglage à basse pression (18) du régulateur de différence de pression (9) et une borne (34) sur le côté d'entrée (21) de la vanne de contrôle (6) à une borne (31) sur le côté de réglage à haute pression (15) du régulateur de différence de pression (9), respectivement.

4. Appareil selon l'une des revendications 1-3, **caractérisé en ce que** le régulateur de différence de pression (9) est monté dans le conduit de retour (4), alors qu'un point de guidage (7) est monté dans le conduit d'alimentation (3), un conduit de signalisation (13) connectant la sortie (14) du point de guidage au côté de réglage à haute pression (15) du régulateur et un autre conduit de signalisation (16) connectant l'entrée (17) du régulateur au côté de réglage à basse pression (18) du régulateur, ou **en ce que** le régulateur de différence de pression (9) est monté dans le conduit d'alimentation (3), alors qu'un point de guidage (7) est monté dans le conduit de retour (4), un conduit de signalisation (26) reliant la sortie (28) du régulateur au côté de réglage à haute pression (15) du régulateur, alors qu'un autre conduit de signalisation (25) connecte le côté de réglage à basse pression (18) du régulateur à l'entrée (24) du point de guidage.

5. Appareil selon l'une des revendications 1-4, **caractérisé en ce que** le régulateur de différence de pression (9) possède un logement (35) avec un manchon (36), de préférence oblique, entre son entrée (17) et sa sortie (28), **en ce que** le manchon s'étend jusqu'à une cloison (37) entre l'entrée et la sortie, laquelle cloison a une ouverture (38) pour un siège (39), **en ce que** dans le manchon une partie inférieure (40) du régulateur est insérée et préférablement fixée par vissage au moyen des boulons (46), et sur cette partie inférieure est fixée une partie supérieure (41) du régulateur, **en ce que** la partie inférieure (40) du régulateur comprend une partie de base en forme de gaine (42), son extrémité libre (43), entièrement scellée au moyen d'un joint torique (44), étant insérée dans l'ouverture de la cloison, la partie de base avec son extrémité d'épaulement étant comprimée dans ou vissée dans l'extrémité extérieure du manchon, préférablement avec un joint torique (47), qui entoure le bec du manchon, **en ce que** entre les deux extrémités de la partie de base (42) est pourvue une section de paroi avec des ouvertures radiales (48), qui permet le passage d'un débit à travers la partie de base, et que le siège (39) est monté entre la partie de fond de la région de transition entre ladite section de paroi avec une ouverture et une extrémité libre de la partie de base, qui est complètement fermée.

6. Appareil selon la revendication 5, **caractérisé en ce que**, immédiatement à l'extérieur de l'extrémité de manchon externe, la partie de base (42) se transforme en une partie de connexion élargie en forme de cuvette (49), qui est supportée avec un épaulement radial (50) par l'extrémité de manchon libre et est préférablement fixée sur cette dernière par des boulons (46), et qui avec son extrémité libre, forme un collier de montage saillant (51) avec des trous axiaux pour le montage de boulons (52), au moyen desquels la partie supérieure (41) avec un collier de raccord (53) et des alésages axiaux opposés est fixée à la partie inférieure (40), et **en ce que** la partie inférieure (40) ainsi que la partie supérieure (41) sont pourvues de bornes (30, 31, 32) sur plusieurs niveaux et/ou dans plusieurs directions radiales pour la désaération et/ou la connexion du conduit de signalisation.

7. Appareil selon la revendication 6, **caractérisé en ce que** dans l'extrémité de l'épaulement (45), une partie de guidage (55) est insérée par vissage et scellage au moyen d'un joint torique placé autour (54), dont la partie de guidage avec une bride radiale (56) est contigu à la zone de bec de l'extrémité d'épaulement et dont l'extrémité arrière (57) est conçue pour recevoir un outil et est plié vers l'intérieur afin de former une constriction interne (59), à travers laquelle est insérée l'extrémité arrière (60) d'un cône de vanne (61), **en ce que** la partie interne large de la partie de guidage forme un canal de guidage (62) pour un élargissement en forme de bride (63) sur le cône avec un joint torique enfoncé placé autour (64), et **en ce que** ladite partie de cône pliée vers l'intérieur forme une limitation pour le mouvement d'ouverture du cône.

8. Appareil selon les revendications 1-7, **caractérisé en ce que** le cône (61) possède de façon appropriée des trous de passage axiaux, **en ce que** son extrémité libre est élargie en une plaque (65), dont le côté, qui est en face du siège (39), adjacent à la périphérie est pourvu d'un joint torique enfoncé (66), contre cette partie d'anneau, qui est en face de la partie centrale axiale, où une plaque de serrage de façon appropriée partiellement sphérique (67) avec sa partie périphérique est contiguë, **en ce que** la plaque de serrage est fixée à un support (69) au moyen d'un boulon fileté (68) inséré dans l'extrémité libre du cône, ou **en ce que** la plaque de serrage (67), le support (69) et une partie (68) d'insertion d'un outil forment une unité, qui peut être insérée dans le cône, et **en ce que** la plaque (65) pendant toute sa course à distance est entourée par une section de paroi de base avec des ouvertures (48), qui forme également une gaine protectrice (70) autour des pièces sensibles du cône et du siège (39) pendant le stockage et le chargement.

9. Appareil selon la revendication 7 ou 8, **caractérisé en ce que** l'extrémité arrière de l'une des extrémités de cône (71) d'un arbre (72) est fixée, par vissage et/ou pression, l'autre extrémité (73) de l'arbre ayant de préférence une forme polygonale et étant insérée dans une ouverture (74), qui s'engage avec ladite autre extrémité, dans un coussinet (75) dans un volant de manoeuvre (76), monté à l'extérieur de la partie supérieure et qui possède à son tour un logement symétrique non rotatif (77), dans lequel est inséré un coussinet de volant de manoeuvre (78), qui s'engage avec ladite partie et qui est fileté sur un collet (80), qui est en saillie depuis l'extrémité (79) de la partie supérieure et qui reçoit dans une ouverture de fond (81) avec un anneau de fermeture (82) de préférence l'extrémité de diamètre réduit (83) du coussinet de l'arbre (75), laquelle extrémité est pourvue d'une ouverture hexagonale ou similaire (85), accessible à travers une ouverture (84) dans le volant de manoeuvre, laquelle ouverture est conçue pour recevoir un outil, qui va faire tourner le coussinet de l'arbre et par conséquent également l'arbre par rapport à un dispositif de précontrainte sans faire tourner le volant de manoeuvre, **en ce que** la rotation du volant de manoeuvre est prévue pour que, par l'écartement du filetage sur le collet de la partie supérieure et l'adaptabilité axiale du coussinet de l'arbre (75) par rapport au coussinet (78), le coussinet de l'arbre (75) avec son extrémité intérieure soit contigu avec une crapaudine (86) sur l'arbre de manière à déplacer le fuseau dans une direction axiale, jusqu'à ce que le cône scelle le logement, et que le coussinet de l'arbre (75) dans sa position d'extrémité en poussée soit contigu avec une bride (119) à son extrémité interne, l'extrémité de la partie supérieure et sur son côté externe est pourvue d'un joint torique enfoncé (87) de manière à sceller le collet de la partie supérieure.

10. Appareil selon la revendication 9, **caractérisé en ce que** ledit dispositif de précontrainte inclut un ressort de compression (88), en forme de ressort à spirale, dont la petite extrémité adjacente au volant de manoeuvre est contigu à une barre transversale (89) sous forme de dispositif de tension à ressort, qui est filetée sur l'arbre et qui est préférablement fixée de façon adéquate à l'extérieur du filetage au moyen d'un système de verrouillage (90) dans une rainure dans l'arbre, **en ce que** les extrémités de la barre transversale (89) sont fixées contre une rotation par leur guidage dans des rétrécissements latéraux (91) de la partie supérieure, et **en ce que** l'extrémité du ressort de compression (88) adjacente au cône est contiguë à un support (92) avec une plaque radiale (93) avec une large ouverture centrale (94) afin que l'arbre passe au travers et avec des ouvertures circulaires en forme d'arc (95), préférablement distribuées le long de la périphérie.

11. Appareil selon la revendication 10, **caractérisé en ce que** la plaque est entourée d'une paroi axiale courte (96) avec une bride annulaire externe (97) et préférablement des projections distribuées le long de la périphérie interne (98) entre les ouvertures de plaque (95) de manière à centrer le ressort de compression, **en ce que** la bride annulaire est fixée entre une crapaudine (99) dans le collier de montage (51) et le collier (53) de la partie supérieure, et **en ce que** la paroi d'anneau (96) possède des rainures annulaires externes (100 et 101, respectivement) sur les deux côtés de la bride annulaire afin d'y recevoir des joints toriques ou similaires (102 et 103, respectivement), qui sont contigus à la partie supérieure et à la partie inférieure, respectivement, adjacentes au collier de montage respectif.

12. Appareil selon la revendication 11, **caractérisé en ce que** le joint torique (103) de la paroi d'anneau, qui est contigu à la partie inférieure est un coussinet d'extrémité d'une membrane (104), de préférence en caoutchouc, renforcé par un tissu, **en ce que** à partir du coussinet, la membrane s'étend au début parallèlement à la paroi en forme de cuvette de la partie inférieure de manière à obtenir le premier côté d'un pli arrondi mou (104), lequel est ensuite plié à distance de ladite paroi vers le haut jusqu'à un niveau, qui est à peu près le même que le niveau du coussinet ou légèrement inférieur, où les pièces centrales de la membrane sont supportées par une plaque de support symétrique rotative (105), de préférence avec un bord extérieur (106) et une partie de cuvette interne (107), qui s'étendent les deux vers l'épaulement de la partie basse, **en ce que** la partie de cuvette forme une entaille dans la plaque de support et la membrane suit ladite entaille de même que le côté supérieur extérieur de la plaque et est fixé par vulcanisation sur ces pièces, **en ce que** dans le fond de la partie de cuvette est pourvu un alésage central, conçu afin de laisser passer l'arbre au travers, la membrane étant comprimée de préférence à travers cet alésage et se terminant à une courte distance à partir du côté inférieur du fond de la partie de cuvette, et **en ce que** l'extrémité arrière du cône possède de façon appropriée une surface légèrement concave ou conique et reçoit une plaque coulissante, qui entoure l'arbre et est faite d'un matériau de réduction de friction, par exemple une matière plastique de fluoréthène.

13. Appareil selon la revendication 11, **caractérisé en ce que** sous forme de dispositif de réglage entre le côté de réglage à haute pression et celui à basse pression (15 et 18, respectivement) on a utilisé un piston (108) en métal et/ou en matière plastique, qui est un cylindre relativement court (109) avec une paroi radiale (110), dont le centre est un noyau (111), qui entoure l'arbre, lequel noyau possède de préférence la même longueur et de préférence est légèrement plus long que la paroi d'anneau radial, les extrémités de la paroi d'anneau et le noyau, qui sont en face de l'épaulement, étant placés à peu près au même niveau, **en ce que** le noyau entre ses extrémités entoure l'arbre avec une brèche annulaire relativement large (114), **en ce que** au moins l'ouverture interne (112) de l'une des extrémités de noyau a un diamètre plus large que l'arbre, **en ce que** dans au moins une desdites ouvertures de noyau interne et/ou dans la zone de milieu axial du noyau est enfoncé un joint torique (113), qui permet d'obtenir une certaine oscillation du piston autour de l'arbre, l'autre extrémité de noyau et le centre de noyau axial, respectivement, étant utilisés sous forme de centre d'oscillation.

14. Appareil selon la revendication 13, **caractérisé en ce que** le cylindre (109) est guidé par une extension relativement courte de la paroi d'anneau (96), où un joint torique (115) est enfoncé, **en ce que** l'extension contient le piston avec un jeu et a une longueur telle que le matériau de paroi sera suffisant pour maintenir en place le joint torique (115) et permettre la réalisation du mouvement d'oscillation du piston dans la zone périphérique.

15. Appareil selon la revendication 13 ou 14, **caractérisé en ce que** le diamètre de l'arbre varie dans la direction longitudinale de l'arbre dans la zone du mouvement du joint torique (113) du piston, qui est contigu à l'arbre, afin de varier la pression sur cet anneau, et/ou **en ce que** cet anneau est monté dans une rainure avec une section transversale asymétrique avec une paroi de rainure courte par rapport au cône, laquelle avec un anneau de pressage (120), dont la forme s'adapte à l'extrémité arrière du cône, est conçue pour être contigu au joint torique et a un effet d'étanchéité dans la direction axiale.
